# EUROPÄISCHE PATENTSCHRIFT

(11) **EP 0 941 618 B1**
(45) Veröffentlichungstag und Bekanntmachung des Hinweises auf die Patenterteilung: **15.11.2006**
(21) Anmeldenummer: 98955363.1
(22) Anmeldetag: 30.09.1998
(51) Int. Cl.: H04N 17/00, H04N 5/44

(54) **ANORDNUNG ZUR BESTIMMUNG DER QUALITÄT EINES FERNSEHBILDES**
DEVICE FOR DETERMINING THE QUALITY OF A TELEVISION IMAGE SIGNAL
DISPOSITIF POUR DETERMINER LA QUALITE D'UNE IMAGE DE TELEVISION

(30) Priorität: 30.09.1997 DE 19743124
(43) Veröffentlichungstag der Anmeldung: 15.09.1999
(73) Patentinhaber: XSYS Interactive Research GmbH, 78050 Villingen-Schwenningen (DE)
(72) Erfinder: LINK, Hermann, D-78166 Donaueschingen-Grüningen (DE); SCHRADI, Stefan, D-78048 Villingen-Schwenningen (DE)
(74) Vertreter: Westphal, Klaus
(86) Internationale Anmeldenummer: PCT/DE1998/002904
(87) Internationale Veröffentlichungsnummer: WO 1999/017557

(56) Entgegenhaltungen:
- WO-A-95/24785
- WO-A-97/09792
- US-A- 4 402 013
- US-A- 4 636 860
- US-A- 4 682 230
- US-A- 4 796 088
- US-A- 5 303 396
- US-A- 5 335 010
- US-A- 5 777 693
- PATENT ABSTRACTS OF JAPAN vol. 14, no. 414 (E-975), 7. September 1990 & JP 02 159886 A (CLARION CO LTD), 20. Juni 1990
- PATENT ABSTRACTS OF JAPAN vol. 13, no. 142 (E-739), 7. April 1989 & JP 63 304728 A (MITSUBISHI ELECTRIC CORP), 13. Dezember 1988
- PATENT ABSTRACTS OF JAPAN vol. 96, no. 10, 31. Oktober 1996 & JP 08 149060 A (MATSUSHITA ELECTRIC IND CO), 7. Juni 1996

## Beschreibung

Die Erfindung betrifft eine Schaltungsanordnung zur Bestimmung der Qualität eines Videosignals und/oder eines Fernsehbildes.

Der Empfang und die Wiedergabe von Fernsehbildern, in ortsfesten Empfangsstationen bereitet kaum Schwierigkeiten, weil die Empfangsverhältnisse gut sind und weitgehend konstant bleiben. Dagegen können die Empfangsverhältnisse für eine mobile Empfangsstation je nach Beschaffenheit des Geländes erheblich schwanken. Befindet sich die mobile Empfangsstation z. B. in einer bergigen Landschaft, können Echos den Empfang erheblich stören; im Funkschatten von Bergen oder Hügeln kann die Funkverbindung sogar vollständig zusammenbrechen, so daß anstelle eines Fernsehbildes nur noch Rauschen auf dem Bildschirm zu sehen ist.

Inzwischen werden Kraftfahrzeuge, wie z. B. PKW und Reisebusse, aber auch Eisenbahnfahrzeuge, mit Fernsehempfängern und Bildschirmen ausgerüstet, um einerseits Nachrichten, beispielsweise über Videotext übermittelte Verkehrsmeldungen, anzeigen oder andererseits die Reisenden mit Fernsehprogrammen unterhalten zu können. Aufgrund der infolge des gerade befahrenen Geländes unter Umständen erheblich schwankenden Empfangsverhältnisse in einer sich bewegenden Empfangsstation werden die Augen der reisenden Fernsehzuschauer in unangenehmer Weise stark beansprucht, weil die Bildqualität in erheblichem Maße schwanken kann. Durchfährt das Fahrzeug z. B. einen Funkschatten, so sieht der Betrachter nur noch Rauschen auf dem Bildschirm Das Betrachten eines Fernsehprogramms mit derartigen Störungen führt eher zur Ermüdung der Zuschauer als daß es deren Unterhaltung dient.

Es ist bekannt, den Empfang von Funksignalen in mobilen Empfangsstationen durch Mehrwegeempfang, im englischen als Diversity bezeichnet, zu verbessern. Unter Antennen-Diversity versteht man, daß ein Empfänger an eine von mehreren, meist räumlich getrennten Antennen anschließbar ist, während mit Frequenz-Diversity ein System aus mehreren Empfängern bezeichnet wird, die auf unterschiedlichen Frequenzen gleiche Signale oder dieselben Programme empfangen. Unter Raum-Diversity versteht man ein System aus mehreren Empfängern, die mit räumlich getrennten Antennen gleiche Signale empfangen.

Um in einer Diversity-Empfangsanlage mit mehreren Empfängern den Empfänger mit dem besten Empfang auszählen zu können, ist ein aussagekräftiges Kriterium erforderlich.

Die US 5 777 693 A offenbart eine Diversity-Empfangsanlage für eine sich bewegende Einheit, beispielsweise ein Fahrzeug.

Der US 4 636 860 A ist eine Vorrichtung zu entnehmen, welche das Noise-Signal derart auswertet, dass die Zahl der Impulse, welche einen vorgegebenen Wert überschreiten, gezählt wird.

Aus der US 5,303,396 ist bekannt, dass die Breite der Störimpulse ein wichtiger Parameter für die Bildqualität ist.

Es ist daher Aufgabe der Erfindung, eine demgegenüber verbesserte Schaltungsanordnung zur Bestimmung der Qualität eines Videosignals und/oder eines Fernsehbildes anzugeben.

Die Erfindung geht von der ersten Erkenntnis aus, dass in einer Zeile nach dem Horizontal-Synchronimpuls auftretende Störimpulse als Maß für die Bildqualität dienen können. Die Erfindung geht weiter von der zweiten Erkenntnis aus, dass die Anzahl der Störimpulse je Zeile sowie weitere die Störimpulse kennzeichnende Parameter, wie Amplitude, Impulsbreite und Position der Störimpulse, innerhalb einer Zeile wichtige, die Bildqualität bestimmende physikalische Größen sind.

Die Erfindung löst diese Aufgabe durch die Schaltungsanordnung gemäß Anspruch 1.

Diese Lösung beruht auf der Erkenntnis, dass Fälle auftreten können, wo der Empfänger mit der geringsten Anzahl an Störimpulsen je Zeile ein schlechteres Bild liefert als z. B. ein anderer Empfänger mit mehr Störimpulsen je Zeile, weil neben der Anzahl der Impulse auch deren Breite die Bildqualität beeinflussen. In einer Diversity-Empfangsanlage kann der Empfänger mit der geringsten Anzahl an Störimpulsen ein weniger gutes Bild liefern als ein anderer, wenn die Impulsbreiten beim Empfänger mit der geringsten Anzahl an Störimpulsen größer sind als beim anderen.

Gemäß der Erfindung werden die in einer Zeile detektierten Störimpulse gezählt. Die Anzahl der Störimpulse ist daher ein Maß oder besser gesagt eine Maßzahl für die Bildqualität.

Wenn z. B. in einer Diversity-Empfangsanlage mehrere Empfänger Fernsehsignale des gleichen Programms empfangen, stellt die Anzahl der bei den einzelnen Empfängern detektierten Störimpulse je Zeile eine Maßzahl für die Bildqualität dar. Es kann daher der Empfänger mit der jeweils geringsten Anzahl an Störimpulsen je Zeile ausgewählt werden. Beispielsweise kann für jeden Empfänger ein Zähler vorgesehen werden, der die Störimpulse innerhalb einer Zeile zählt. Als Empfänger mit dem augenblicklich besten Bild kann dann jeweils der Empfänger mit der geringsten Anzahl an Störimpulsen ausgewählt werden.

Es können aber auch Fälle auftreten, wo der Empfänger mit der geringsten Anzahl an Störimpulsen je Zeile ein schlechteres Bild liefert als z. B. ein anderer Empfänger mit mehr Störimpulsen je Zeile, weil neben der Anzahl der Impulse auch deren Amplitude die Bildqualität beeinflussen. Wenn z. B. bei einem Empfänger viele Störimpulse geringer Amplitude auftreten, während dagegen beim Empfänger mit der geringsten Anzahl an Störimpulsen je Zeile die Störimpulse größere Amplituden aufweisen, kann der Empfänger mit der größeren Anzahl an Störimpulsen ein besseres Bild liefern als der Empfänger mit weniger Störimpulsen je Zeile, aber größerer Amplitude.

Die Erfindung wird nun näher anhand der in den Figuren dargestellten Ausführungsbeispiele von Schaltungsanordnungen zur Durchführung des erfindungsgemäßen Verfahrens erläutert.

Es zeigen
Figur 1 ein erstes Ausführungsbeispiel einer Schaltungsanordnung,
Figur 2 ein zweites Ausführungsbeispiel einer Schaltungsanordnung,
Figur 3 ein drittes Ausführungsbeispiel einer Schaltungsanordnung,
Figur 4 ein viertes Ausführungsbeispiel einer Schaltungsanordnung,
Figur 5 ein fünftes Ausführungsbeispiel einer Schaltungsanordnung,
Figur 6 ein Impulsdiagramm.

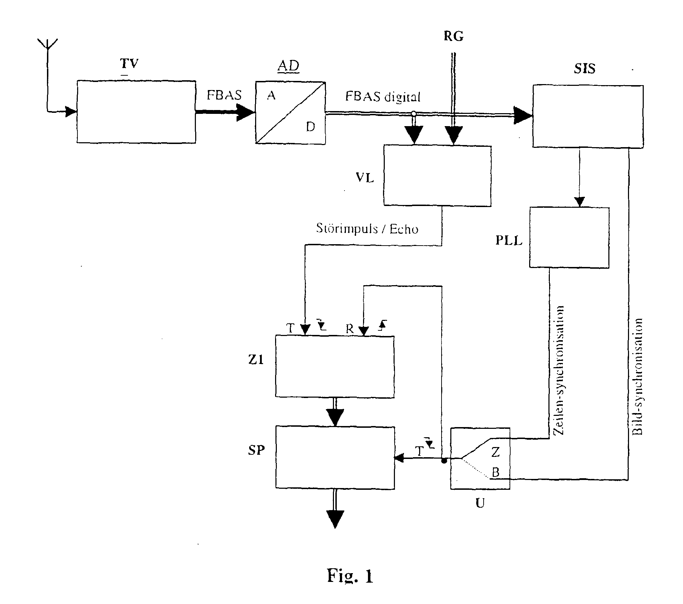

In der Figur 1 empfängt ein Fernsehempfänger TVE - im englischen als TV-Tuner bezeichnet - mittels einer Antenne A Fernsehsignale, die er in das sogenannte Farbbildaustastsynchronsignal, abgekürzt FBAS-Signal wandelt. Das FBAS-Signal, häufig auch nach der englischen Bezeichnung Composit Video and Burst Synchronization als CVBS-Signal bezeichnet, wird dem Eingang eines Analog-Digital-Wandlers AD zugeführt, dessen Ausgangssignal - das digitalisierte FBAS-Signal - dem Eingang eines Synchronimpulsseparators SIS und dem ersten Eingang eines Vergleichers VL zugeführt wird, an dessen zweitem Eingang eine Referenzgröße RG liegt. Der Ausgang des Vergleichers VL ist mit dem Takteingang eines Zählers Z1 verbunden, dessen Rücksetzeingang R mit dem Takteingang T eines Speichers SP und dem Ausgang eines steuerbaren Umschalters U und dessen Ausgang mit dem Eingang des Speichers SP verbunden ist. Der Zeilensynchronisationsausgang des Synchronimpulsseparators SIS ist mit dem Eingang einer Phasenregelschleife PLL verbunden, deren Ausgang mit dem ersten Eingang des steuerbaren Umschalters U verbunden ist. Der Bildsynchronisationsausgang des Synchronimpulsseparators SIS ist mit dem zweiten Eingang des steuerbaren Umschalters U verbunden.

Der Analog-Digital-Wandler AD wandelt das vom Fernsehempfänger TVE empfangene analoge FBAS-Signal in ein digitales FBAS-Signal. Der Vergleicher VL prüft, ob die im FBAS-Signal auftretenden Impulse die vorgegebene Referenzgröße RG überschreiten. Ist dies der Fall, erhält der Zähler Z1 einen Zählimpuls. Auf diese Weise werden diejenigen in einer Zeile auftretenden Störimpulse gezählt, deren Amplitude und/oder Impulsbreite die Referenzgröße RG überschreiten. Bei der in der Figur 1 gezeigten Stellung Z des steuerbaren Umschalters U wird der Zähler Z1 mit jedem Horizontal-Synchronimpuls von der Phasenregelschleife PLL zurückgesetzt, während der Speicher SP zur Übernahme des Zählerstandes getaktet wird. Im Speicher SP können daher die Maßzahlen der Zeilen gespeichert werden.

Wird der steuerbare Umschalter in die andere Stellung B geschaltet, so wird der Zähler Z1 mit jedem Vertikalsynchronimpuls zurückgesetzt und der Speicher SP zur Übernahme des Zählerstandes getaktet. In diesem Fall werden im Speicher SP die Gesamtmaßzahlen für Halb- oder Vollbilder gespeichert.

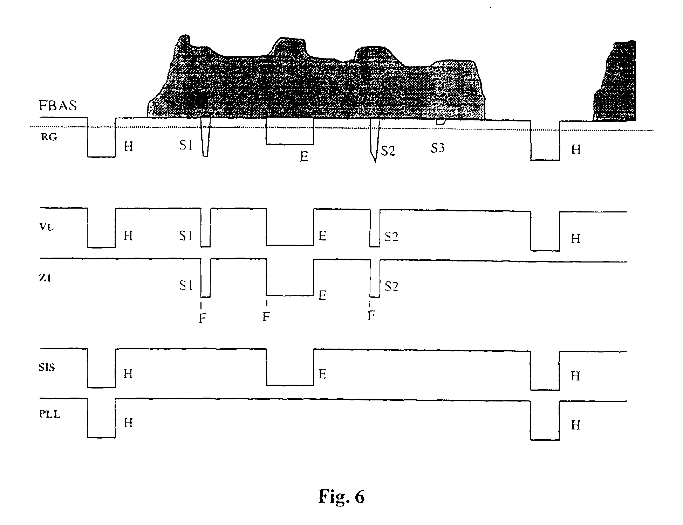

In der Figur 6 sind Impulsdiagramme gezeigt.

Das FBAS-Signal enthält zwischen den beiden Horizontal-Synchronimpulsen H einer Zeile beispielhaft drei schmale Störimpulse S1, S2 und S3 sowie einen breiten Störimpuls E, der ein Echo eines Horizontal-Synchronimpulses ist.

Das Ausgangssignal des Vergleichers VL enthält nur noch die beiden Horizontal-Synchronimpulse H, die Störimpulse S1, S2 und E, denn der Störimpuls S3 wird ausgeblendet, weil seine Amplitude die Referenzgröße RG nicht überschreitet.

Der Zähler Z1 zählt daher nur die fallenden Flanken der Störimpulse S1, S2 und E. Der Synchronimpulsseparator erzeugt neben den beiden Horizontal-Synchronimpulsen H auch den störenden Echoimpuls E. der jedoch von der Phasenregelschleife PLL herausgefiltert wird, weil sie nur regelmäßig wiederkehrende Impulse durchläßt bzw. erzeugt. Außerdem ersetzt die Phasenregelschleife fehlende Horizontal-Synchronimpulse. Voraussetzung hierfür ist allerdings ein verhältnismäßig eng eingestellter Fangbereich.

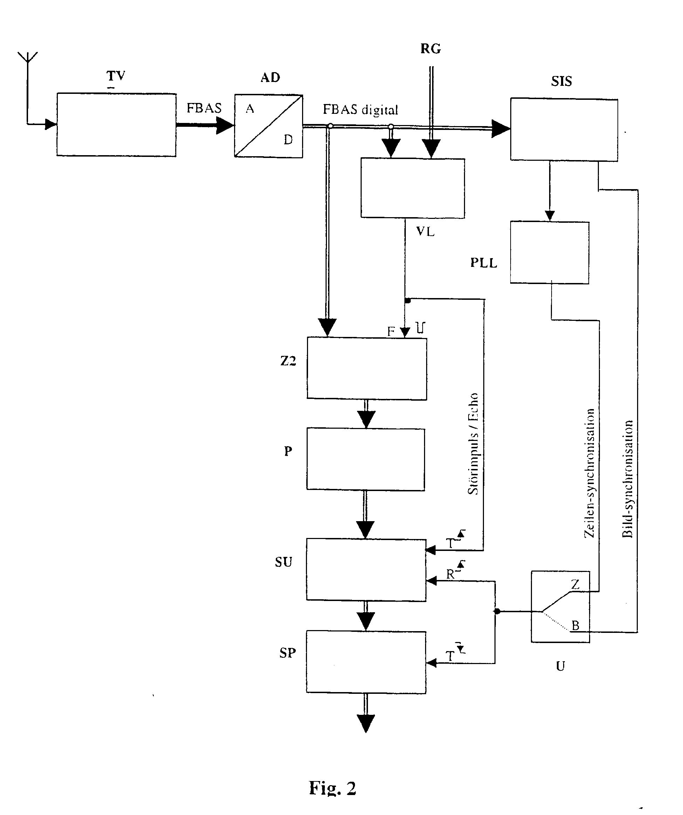

Bei dem in der Figur 2 abgebildeten zweiten Ausführungsbeispiel einer Schaltungsanordnung sind anstelle des Zählers Z1 ein Zähler bzw. Zwischenspeicher Z2 und ein Prozessor P vorgesehen. Der Ausgang des Analog-Digital-Wandlers AD ist mit dem Eingang des ersten Zwischenspeichers Z2 verbunden, dessen Takteingang mit dem Ausgang des Vergleichers VL verbunden ist und dessen Ausgang mit dem Eingang des Prozessors P verbunden ist. Der Ausgang des Prozessors P ist mit dem Eingang des Summierers SU verbunden, der auch im Prozessor P integriert sein kann.

Der Zwischenspeicher Z2 speichert die Amplituden der Störimpulse S1, S2 und E, indem er sie addiert bzw. integriert oder sie einzeln an den Prozessor P weiterleitet, wo die Amplituden der Störimpulse mit Faktoren gewichtet werden können. Im Speicher SP werden die aus den Amplituden der Störimpulse gewonnenen Maßzahlen der einzelnen Zeilen oder Halb- bzw. Vollbilder gespeichert, je nach Stellung des steuerbaren Umschalters U.

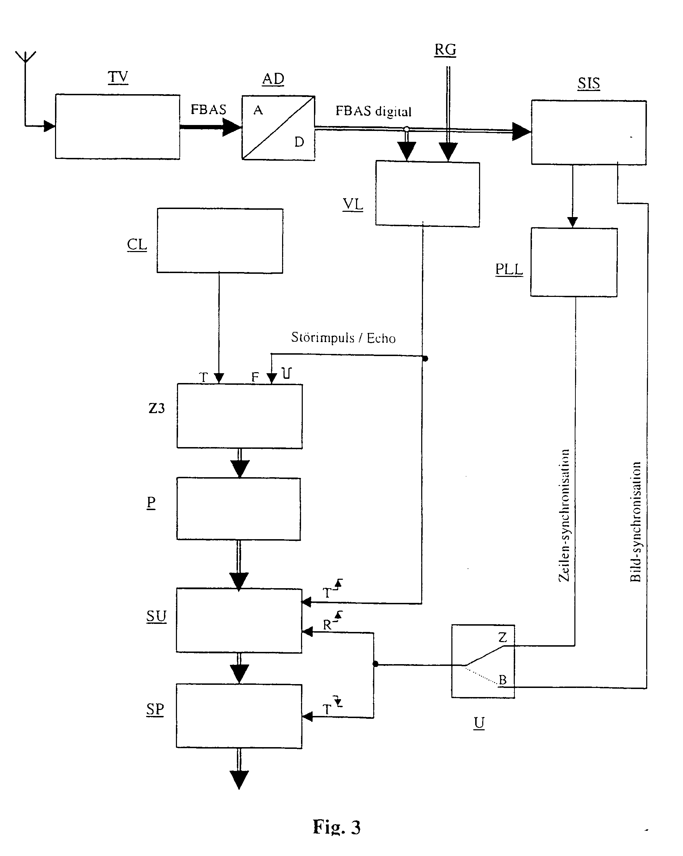

Das in der Figur 3 dargestellte dritte Ausführungsbeispiel einer Schaltungsanordnung unterscheidet sich von dem in der Figur 2 gezeigten zweiten Ausführungsbeispiel dadurch, daß der Zwischenspeicher Z2 durch einen Zähler bzw. Zwischenspeicher Z3 und einen Taktgenerator CL ersetzt ist.

Anstelle des Ausgangs des Analog-Digital-Wandlers AD ist der Ausgang des Vergleichers VL mit dem Freigabeeingang des Zählers bzw. Zwischenspeichers Z3 verbunden, dessen Takteingang T mit dem Taktgenerator CL und dessen Ausgang mit dem Eingang des Prozessors P verbunden ist.

Der Zwischenspeicher Z3 speichert die Impulsbreiten der Störimpulse S1, S2 und E, indem er sie zu einer Gesamtimpulsbreite addiert bzw. integriert oder einzeln an den Prozessor P weiterleitet, wo sie vor der Addition mit Faktoren gewichtet werden können. Im Speicher SP werden die aus den Impulsbreiten der Störimpulse gewonnenen Maßzahlen der einzelnen Zeilen oder Halb- bzw. Vollbilder gespeichert, je nach Stellung des steuerbaren Umschalters U.

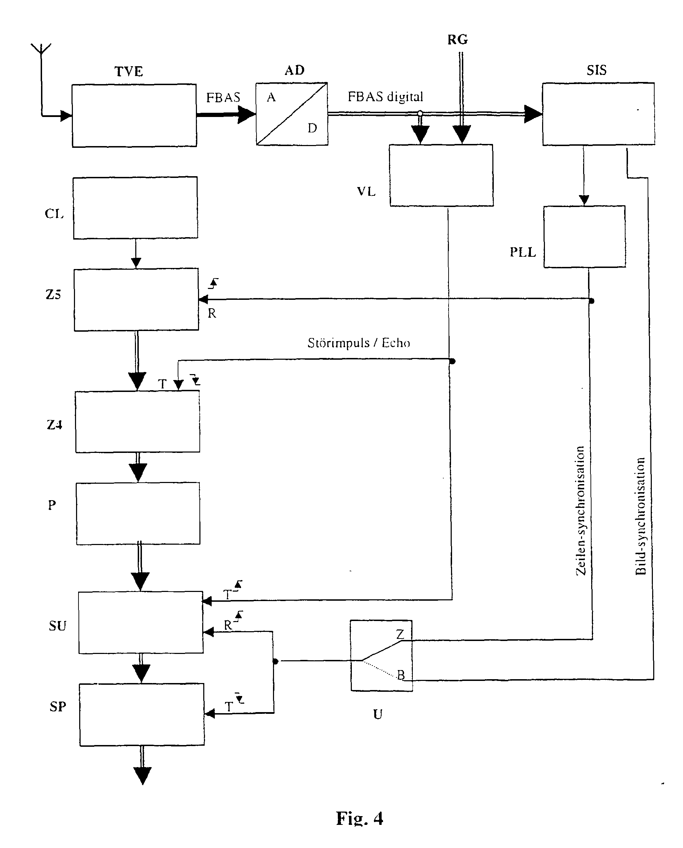

Bei dem in der Figur 4 gezeigten vierten Ausführungsbeispiel einer Schaltungsanordnung stimmt der Aufbau bezüglich der Antenne A, des Fernsehempfängers TVE, des Analog-Digital-Wandlers AD, des Vergleichers VL, des Synchronimpulsseparators SIS, der Phasenregelschleife PLL, des steuerbaren Umschalters U, des Speichers SP, des Summierers SU und des Prozessors P mit den Schaltungsanordnungen der Figuren 2 und 3 überein. Der Eingang des Prozessors P ist jedoch mit dem Ausgang eines Zählers bzw. Zwischenspeichers Z4 verbunden, dessen Eingang mit dem Ausgang eines Zählers Z5 und dessen Takteingang T mit dem Ausgang des Vergleichers VL verbunden ist. Der Eingang des Zählers Z5 ist mit dem Ausgang eines Taktgenerators CL verbunden; der Rücksetzeingang des Zählers Z5 ist ebenso wie der erste Eingang des steuerbaren Umschalters U mit dem Ausgang der Phasenregelschleife PLL verbunden.

Mit jedem am Ausgang des Vergleichers VL abgegebenen Impuls übernimmt der Zwischenspeicher Z4 den Zählerstand des vom Taktgenerator CL getakteten Zählers Z5, welcher der jeweiligen Position der einzelnen Störimpulse S1, S2 und E entspricht. Diese die Positionen der Störimpulse repräsentierenden Zählerstände werden im Prozessor P mit Faktoren gewichtet; im Summierer SU werden die auf diese Weise erzeugten gewichteten Maßzahlen addiert und - je nach Stellung des steuerbaren Umschalters U - für Zeilen, Halb- oder Vollbilder gespeichert.

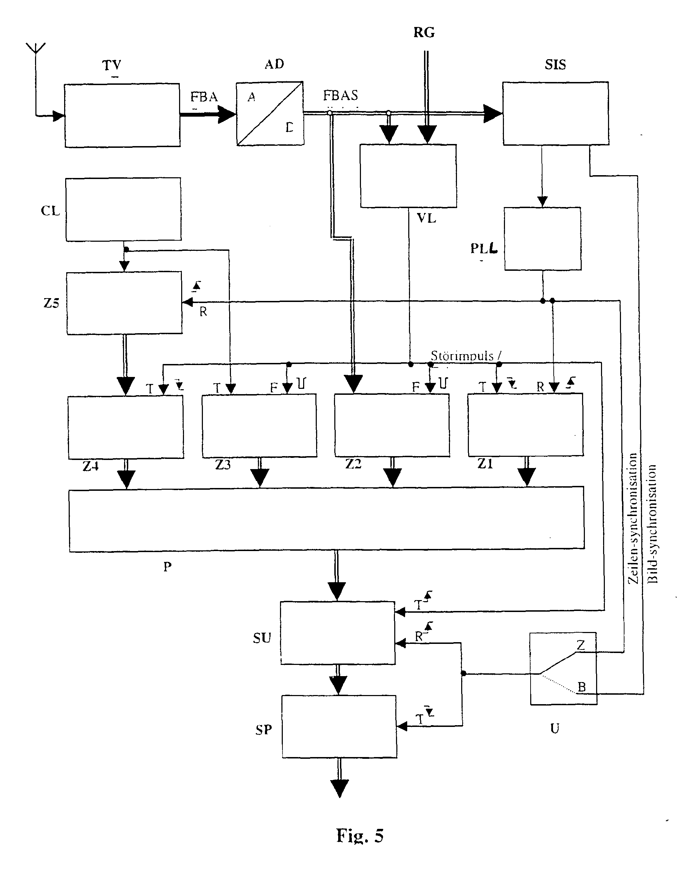

Das in der Figur 5 abgebildete fünfte Ausführungsbeispiel einer Schaltungsanordnung stellt eine Kombination der in den Figuren 1 - 4 gezeigten ersten 4 Ausführungsbeispiele dar.

Der Ausgang des Zählers Z1 und die Ausgänge der Zähler bzw. Zwischenspeicher Z2, Z3 und Z4 sind mit den Eingängen des Prozessors P verbunden.

Der Prozessor P gewichtet die vom Zähler Z4 gelieferten Positionen bzw. Maßzahlen mit Faktoren und leitet sie mit den von den Zählern Z1 - Z3 gelieferten Maßzahlen zur Addition an den Summierer SU, wo sie summiert werden. Im Prozessor P können aber auch die einzelnen den Impulsbreiten und/oder den Amplituden entsprechenden Maßzahlen der Zähler Z2 und Z3 vor der Addition mit Faktoren gewichtet werden. Neben einer Gewichtung der einzelnen Amplituden und Impulsbreiten können im Prozessor P die Summen der ungewichteten Amplituden und/oder Impulsbreiten mit Faktoren gewichtet werden. Doch auch die Summen der bereits gewichteten Amplituden und/oder Impulsbreiten können nochmals mit Faktoren gewichtet werden. Es ist jede denkbare Kombination der Gewichtung möglich.

Die Zähler bzw. Zwischenspeicher Z2 und Z3 können als digitale Zähler oder, wenn der Analog-Digital-Wandler AD nicht vorgesehen ist, als Integrator ausgeführt sein. Der Summierer SU und der Speicher SP können im Prozessor P integriert sein.

Für normale Fernsehsendungen ist es sinnvoll, die im Bereich der Bildmitte auftretenden Störimpulse und deren Parameter stärker zu gewichten als die in den Randbereichen liegenden Störimpulse.

Dagegen ist es beim Betrachten von Fernsehsendungen mit Untertiteln, wie z. B. bei Spielfilmen mit Untertitel und bei Programmen mit Videotext für Gehörlose sinnvoll, die im Bereich der Untertitel liegenden Störimpulse und deren Parameter stärker zu gewichten.

Die Erfindung ist besonders gut für Diversity-Empfangsanlagen mit mehreren Fernsehempfängern geeignet, weil die Erfindung ein aussagekräftiges Kriterium für die Bildqualität liefert. Mittels der erfindungsgemäß erzeugten Maßzahlen und Gesamtmaßzahlen zur Bewertung der Bildqualität der einzelnen in einer Diversity-Empfangsanlage eingebauten Fernsehempfänger läßt sich auf einfache Art und Weise der Fernsehempfänger mit der besten Bildqualität feststellen und zum Empfang auswählen.

Die Umschaltung auf den Fernsehempfänger mit dem jeweils besten Bild kann zeilen-, halbbild- oder vollbildweise erfolgen. Derjenige Fernsehempfänger mit der kleinsten Gesamtmaßzahl erzeugt das beste Bild, während derjenige mit der größten Gesamtmaßzahl das Bild mit der geringsten Qualität liefert.

Insbesondere ist die Erfindung für eine mobile Diversity-Empfangsanlage z. B. in einem PKW, Reisebus oder Eisenbahnfahrzeug, geeignet, weil wie eingangs beschrieben, bei einer mobilen Anlage die Empfangsverhältnisse je nach Art des befahrenen Geländes starken Schwankungen unterliegen. Doch auch für Fernsehempfänger und Videorecorder ist die Erfindung geeignet, wenn eine Bewertung der Bildqualität aus irgendwelchen Gründen erforderlich ist.

## Patentansprüche

1. Schaltungsanordnung zur Bewertung der Bildqualität eines Fernsehbildes, wobei in einer Zeile nach dem Horizontal-Synchronimpuls auftretende Störimpulse detektiert und bezüglich ihrer Parameter ausgewertet werden, um ein Maß für die Qualität des Videosignals zu gewinnen,
**dadurch gekennzeichnet, dass**
ein FBAS-Signal (FBAS) dem Eingang eines Synchronimpulsseparators (SIS) und dem ersten Eingang eines Vergleichers (VL) zugeführt wird, an dessen zweitem Eingang eine Referenzgröße (RG) anliegt, dass der Zeilensynchronisationsausgang des Synchronimpulsseparators (SIS) mit dem Eingang einer Phasenregelschleife (PLL) verbunden ist, dass der Ausgang der Phasenregelschleife (PLL) oder der Bildsynchronisationsausgang des Synchronimpulsseparators (SIS) mit dem Takteingang eines Speichers (SP) verbunden ist, dass der Ausgang des Vergleichers (VL) mit dem Freigabeeingang eines Zählers (Z3) und dem Takteingang eines Summierers (SU) verbunden ist und dass der Ausgang eines Taktgenerators (CL) mit dem Takteingang des Zählers (Z3) zum Zählen bzw. Integrieren der Impulsbreiten der detektierten Störimpulse verbunden ist, dessen Ausgang mit dem Eingang eines Prozessors (P) verbunden ist, und dass der Ausgang des Prozessors (P) mit dem Dateneingang des Summierers (SU) verbunden ist, dessen Ausgang mit dem Dateneingang des Speichers (SP) verbunden ist.

2. Schalungsanordnung nach Anspruch 1,
**dadurch gekennzeichnet, dass**
der Ausgang der Phasenregelschleife (PLL) oder der Bildsynchronisationsausgang des Synchronimpulsseparators (SIS) mit dem Rücksetzeingang eines zweiten Zählers (Z1) zum Zählen der Störimpulse verbunden ist, dessen Takteingang mit dem Ausgang des Vergleichers (VL) verbunden ist.

3. Schaltungsanordnung nach Anspruch 1 oder 2,
**dadurch gekennzeichnet, dass**
der Ausgang der Phasenregelschleife (PLL) oder der Bildsynchronisationsausgang des Synchronimpulsseparators (SIS) mit dem Rücksetzeingang des Summierers (SU) verbunden ist, dass das FBAS-Signal (FBAS) am Eingang eines ersten Zwischenspeichers (Z2) liegt, dessen Takteingang mit dem Ausgang des Vergleichers (VL) und dessen Ausgang mit dem Eingang eines Prozessors (P) verbunden ist.

4. Schaltungsanordnung nach Anspruch 3,
**dadurch gekennzeichnet, dass**
als erster Zwischenspeicher (Z2) ein digitaler Speicher oder ein Abtast- oder Halteglied vorgesehen ist.

5. Schaltungsanordnung nach einem der Ansprüche 1-4,
**dadurch gekennzeichnet, dass**
die Impulsbreiten mittels des digitalen Zählers (Z3) summiert oder mittels eines Integrators integriert werden.

6. Schaltungsanordnung nach einem der Ansprüche 1-5,
**dadurch gekennzeichnet, dass**
der Ausgang des Vergleichers (VL) mit dem Takteingang eines zweiten Zwischenspeichers (Z4) und des Summierers (SU) verbunden ist, dass der Ausgang der Phasenregelschleife (PLL) mit dem Rücksetzeingang eines dritten Zählers (Z5) verbunden ist, dass der Bildsynchronisationsausgang des Synchronimpulsseparators (SIS) oder der Ausgang der Phasenregelschleife (PLL) mit dem Rücksetzeingang des Summierers (SU) verbunden ist, dass der Ausgang des Taktgenerators (CL) mit dem Takteingang des dritten Zählers (Z5) verbunden ist, dessen Ausgang mit dem Eingang des zweiten Zwiscnenspeichers (Z4) verbunden ist, dass der Ausgang des zweiten Zwischenspeichers (Z4) mit dem Eingang des Prozessors (P) verbunden ist.

7. Schaltungsanordnung nach einem der Ansprüche 1-6,
**dadurch gekennzeichnet, dass**
der Ausgang der Phasenregelschleife (PLL) mit dem ersten Eingang und der Bildsynchronisationsausgang des Synchronimpulsseparators (SIS) mit dem zweiten Eingang eines steuerbaren Umschalters (U) verbunden ist, dessen Ausgang mit dem Takteingang des Speichers (SP) und dem Rücksetzeingang des Summierers (SU) verbunden ist.

8. Schaltungsanordnung nach einem der Ansprüche 1-7,
**dadurch gekennzeichnet, dass**
dem Vergleicher (VL) und dem Synchronimpulsseparator (SIS) ein Analog-Digital-Wandler (AD) vorgeschaltet ist.

9. Schaltungsanordnung nach einem der Ansprüche 1-8,
**dadurch gekennzeichnet, dass**
das FBAS-Signal (FBAS) von einem Fernsehempfänger (TVE) geliefert wird.

## Claims

1. A circuit arrangement to evaluate the image quality of a television image, whereby the occurrence of noise pulses in a line is detected after the horizontal synchronisation pulse and evaluated with respect to its parameters in order to obtain a measurement of the quality of a video signal, **characterised in that** an FBAS [composite-video] signal (FBAS) is supplied as the input to a synchronisation-pulse separator (SIS), and as a first input to a comparator (VL), at whose second input a reference amplitude (RG) is applied, that the horizontal synchronisation pulse output from the synchronisation-pulse separator (SIS) is connected to the input of a phase-locked loop (PLL), that the output of the phase-locked loop (PLL) or the vertical synchronisation output of the synchronisation-pulse separator (SIS) is connected to the clock input of a memory (SP), that the output of the comparator (VL) is connected to release input of a counter (Z3) and to the clock input of an adder (SU), that the output of a clock generator (CL) is connected to the clock input of the counter (Z3) to count or integrate the pulse width of the detected noise pulse, whose output is connected to the input of a processor (P), and that the output of the processor (P) is connected to the input of the adder (SU), whose output is connected with the data input of the memory (SP).

2. A circuit arrangement according to claim 1, **characterised in that** the output of the phase-locked loop (PLL) or the vertical synchronisation output of the synchronisation-pulse separator (SIS) is connected to the reset input of a second counter (Z1) to count the noise pulses, whose clock input is connected to the output of the comparator (VL).

3. A circuit arrangement according to claim 1 or 2, **characterised in that** the output of the phase-locked loop (PLL) or the vertical synchronisation output of the synchronisation-pulse separator (SIS) is connected to the reset input of the adder (SU), that the FBAS video signal (FBAS) is attached to the input of a first buffer memory (Z2), whose clock input is connected to the output of the comparator (VL) and whose output is connected to the input of a processor (P).

4. A circuit arrangement according to claim 3, **characterised in that** the first buffer memory (Z2) is provided with a digital memory or a sampling or holding element.

5. A circuit arrangement according to claims 1 to 4, **characterised in that** the pulse widths are summed up using a digital counter (Z3) or integrated using an integrator.

6. A circuit arrangement according to one of the claims 1 to 5, **characterised in that** the output of the comparator (VL) is connected to the clock input of a second buffer memory (Z4) and of the adder (SU), that the output of the phase-locked loop (PLL) is connected to the reset input of a third counter (Z5), that the vertical synchronisation output of the synchronisation-pulse separator (SIS) or the output of the phase-locked loop (PLL) is connected to the reset input of the adder (SU), that the output of the clock generator (CL) is connected to the clock input of the third counter (Z5), whose output is connected to the input of the second buffer memory (Z4), that the output of the second buffer memory (Z4) is connected to the input of the processor (P).

7. A circuit arrangement according to one of the claims 1 to 6, **characterised in that** the output of the phase-locked loop (PLL) is connected to the first input of a controllable switch (U), and the vertical synchronisation output of the synchronisation-pulse separator (SIS) is connected to the second input the controllable switch (U), whose output is connected to the clock input of a memory (SP) and to the reset input of the adder (SU).

8. A circuit arrangement according to one of the claims 1 to 7, **characterised in that** an analogue-to-digital converter (AD) is connected before the comparator (VL) and the synchronisation-pulse separator (SIS).

9. A circuit arrangement according to one of the claims 1 to 8, **characterised in that** the FBAS signal (FBAS) is supplied by a television receiver (TVE).

## Revendications

1. Dispositif de connexion pour déterminer la qualité d'une image de télévision, sachant que, dans une ligne après l'impulsion synchrone horizontale, des impulsions parasites sortantes sont détectées et sont évaluées en fonction de leurs paramètres afin d'obtenir une mesure de la qualité du signal vidéo, **caractérisé en ce qu'**un signal FBAS (FBAS) est acheminé vers l'entrée d'un séparateur d'impulsions synchrones (SIS) et vers la première entrée d'un comparateur (VL), une grandeur de référence (RG) étant appliquée à la deuxième entrée du comparateur, **en ce que** la sortie de synchronisation des lignes du séparateur d'impulsions synchrones (SIS) est reliée à l'entrée d'une boucle de déphasage (PLL), **en ce que** la sortie de la boucle de déphasage (PLL) ou la sortie de la synchronisation d'image du séparateur d'impulsions synchrones (SIS) est reliée à l'entrée de fréquence d'une unité de stockage (SP), **en ce que** la sortie du comparateur (VL) est reliée à l'entrée de déblocage d'un compteur (Z3) et à l'entrée de fréquence d'un additionneur analogique (SU), **en ce que** la sortie d'un générateur de fréquence (CL) est reliée à l'entrée de fréquence du compteur (Z3) pour compter ou intégrer les largeurs d'impulsion des impulsions parasites détectées et dont la sortie est reliée à l'entrée d'un processeur (P) et **en ce que** la sortie du processeur (P) est reliée à l'entrée de données de l'additionneur analogique (SU) dont la sortie est reliée à l'entrée de données de l'unité de stockage (SP).

2. Dispositif de connexion selon la revendication 1, **caractérisé en ce que** la sortie de la boucle de déphasage (PLL) ou la sortie de la synchronisation d'image du séparateur d'impulsions synchrones (SIS) est reliée à l'entrée de réinitialisation d'un deuxième compteur (Z1) pour compter les impulsions parasites, dont l'entrée de fréquence est reliée à la sortie du comparateur (VL).

3. Dispositif de connexion selon la revendication 1 ou 2, **caractérisé en ce que** la sortie de la boucle de déphasage (PLL) ou la sortie de la synchronisation d'image du séparateur d'impulsions synchrones (SIS) est reliée à l'entrée de réinitialisation d'un additionneur analogique (SU), **en ce que** le signal FBAS (FBAS) se trouve sur l'entrée d'une première unité de stockage intermédiaire (Z2) dont l'entrée de fréquence est reliée à la sortie du comparateur (VL) et dont la sortie est reliée à l'entrée d'un processeur (P).

4. Dispositif de connexion selon la revendication 3, **caractérisé en ce qu'**une unité de stockage numérique ou un membre de balayage ou de maintien sert de première unité de stockage intermédiaire (Z2).

5. Dispositif de connexion selon l'une des revendications 1 à 4, **caractérisé en ce que** les largeurs d'impulsion sont additionnées à l'aide du compteur numérique (Z3) ou sont intégrées à l'aide d'un intégrateur.

6. Dispositif de connexion selon l'une des revendications 1 à 5, **caractérisé en ce que** la sortie du comparateur (VL) est reliée à l'entrée de fréquence d'une deuxième unité de stockage intermédiaire (Z4) et de l'additionneur analogique (SU), **en ce que** la sortie de la boucle de déphasage (PLL) est reliée à l'entrée de réinitialisation d'un troisième compteur (Z5), **en ce que** la sortie de la synchronisation d'image du séparateur d'impulsions synchrones (SIS) ou la sortie de la boucle de déphasage (PLL) est reliée à l'entrée de réinitialisation de l'additionneur analogique (SU), **en ce que** la sortie du générateur de fréquence (CL) est reliée à l'entrée de fréquence du troisième compteur (Z5) dont la sortie est reliée à l'entrée de la deuxième unité de stockage intermédiaire (Z4) et **en ce que** la sortie de la deuxième unité de stockage intermédiaire (Z4) est reliée à l'entrée du processeur (P).

7. Dispositif de connexion selon l'une des revendications 1 à 6, **caractérisé en ce que** la sortie de la boucle de déphasage (PLL) est reliée à la première entrée et la sortie de la synchronisation d'image du séparateur d'impulsions synchrones (SIS) est reliée à la deuxième entrée d'un commutateur réglable (U) dont la sortie est reliée à l'entrée de fréquence de l'unité de stockage (SP) et à l'entrée de réinitialisation de l'additionneur analogique (SU).

8. Dispositif de connexion selon l'une des revendications 1 à 7, **caractérisé en ce qu'**un convertisseur analogique-numérique (AD) est connecté en amont du comparateur (VL) et du séparateur d'impulsions synchrones (SIS).

9. Dispositif de connexion selon l'une des revendications 1 à 8, **caractérisé en ce que** le signal FBAS (FBAS) est délivré par un récepteur de téléviseur (TVE).
